Europäisches Patentamt

(19) European Patent Office

Office européen des brevets

(11) Publication number: **0 096 128**
**B1**

(12) **EUROPEAN PATENT SPECIFICATION**

(45) Date of publication of patent specification: **27.04.88**

(21) Application number: **82303102.6**

(22) Date of filing: **15.06.82**

(51) Int. Cl.⁴: **B 60 J 1/10,** B 60 R 13/06

(54) Vehicle window assembly.

(43) Date of publication of application:
**21.12.83 Bulletin 83/51**

(45) Publication of the grant of the patent:
**27.04.88 Bulletin 88/17**

(84) Designated Contracting States:
**DE FR GB SE**

(56) References cited:
**CA-A- 702 578**
**DE-A-2 032 990**
**FR-A-2 079 960**
**GB-A-1 186 501**
**GB-A-1 433 218**
**GB-A-2 024 297**
**US-A-2 502 970**
**US-A-3 885 072**
**US-A-4 007 536**
**US-A-4 072 340**
**US-A-4 139 234**
**US-A-4 163 884**
**US-A-4 167 259**
**US-A-4 364 595**

(73) Proprietor: **DONNELLY MIRRORS, INC.**
**49 West Third Street**
**Holland Michigan 49423 (US)**

(72) Inventor: **Morgan, Cleon Clayton**
**128 Birchwood**
**Holland Michigan (US)**
Inventor: **Thomas, John Franklin, Jr.**
**2488 Lakeshore Drive**
**Holland Michigan (US)**
Inventor: **Meyer, Raymond Arthur**
**237 West 18th Street**
**Holland Michigan (US)**

(74) Representative: **Robinson, Anthony John**
**Metcalf**
**Kilburn & Strode 30 John Street**
**London, WC1N 2DD (GB)**

Courier Press, Leamington Spa, England.

## Description

This invention relates to window assemblies for vehicles.

It has been common in vehicle manufacturing procedures to use a piecemeal assembly operation to install a window. Thus, a bead of sealant or the like is applied around the frame of a window, a pane of glass is pressed against the sealant and several clips or fasteners are secured around the glass edge to the surrounding frame to hold the glass in place. Thereafter, decorative covers or frames are placed around the frame or glass edge to dress the edge and cover the fastening area. As will be appreciated, such assembly procedures are time-consuming and expensive. They may also be prone to sealing problems should the bead of sealant not be applied properly or the fasteners be loose or otherwise improperly installed.

More recent forms of unitary window assemblies have been devised for installation directly from the exterior of a vehicle. Such assemblies, like that shown in United States Patent 4,072,340, have included a pane of glass, an adjacent frame, and a casing or gasket of moulded material, such as polyvinyl chloride, extending between the frame and the peripheral edge of the window which holds the pane and frame together. Fasteners are provided at spaced locations along the frame such that the entire assembly can be guided into location over an opening in a vehicle body as a unit with the fasteners extending through apertures provided in the body and secured in a single operation from the interior of the vehicle body.

Alternatively, window assemblies, such as that shown in United States Patent 4,139,234, have included a moulded casing or gasket around the edge of a pane of glass with fasteners moulded in and projecting from the casing or gasket for attachment purposes.

Such prior unitary window assemblies have recently come under close scrutiny because of increased concern over weight reduction and fuel efficiency in automobiles and other vehicles. The relatively heavy frame, typically cast from zinc or other metal and/or the moulded gasket or casing for securing the frame to the window provide significant weight in each window assembly. In addition, as in the structure of U.S. 4,072,340, the decorative frame, which requires the inclusion of fastening means therealong to secure the entire assembly in a vehicle, requires expensive casing techniques making the frame members relatively expensive.

One prior known window assembly is shown US—A—3802143. This shows a rigid primary frame defining a window opening, to which is attached a number of fasteners for fastening the frame to the vehicle body. The pane is glued to the frame along its rear edge and also along its peripheral edge. The frame and the attached fasteners are hidden, in use, by a decorative trim. One problem with this arrangement is that the primary frame is relatively heavy, and it also takes up a considerable amount of space. In addition, the shape of the primary frame, which is bonded both to the rear surface of the pane and also to the peripheral edge surface, means that the decorative trim has to be fairly large and bulky as well.

Another prior art window assembly is shown in GB—A—2024297. This describes a system in which the window is held in place by a number of U-shaped fasteners which are clamped around the edge of the pane, but are not glued in place. The fasteners are hidden, from the front, by a decorative trim. This arrangement corresponds to the features set out in the precharacterising clause of Claim 1. The problem with the arrangement shown in this document is that it is necessary for the fasteners to be U-shaped, and relatively large to ensure that they hold the pane sufficiently securely. The fact that the fasteners have to extend around to the front of the pane means that the trim frame must also be relatively large and bulky. The fasteners also act as resilient spacers, to space the window pane from the vehicle body. They have a significant disadvantage, however, in that the spacing depends upon the tightness of the locking nuts. This means that it is difficult to arrange for the pane to be spaced at the exact desired distance from the vehicle body.

With the focus on weight reduction and economies in designing new vehicles, it was desired that window assemblies be lighter in weight and less expensive, yet retain rigidity, strength and structural integrity. The present invention helps to solve the above problems while maintaining the strength, decorative trim function, sealing function and desirable fastening characteristics of previously known unitary or modular window assemblies.

According to the present invention a window assembly for vehicles adapted for installation as a unit to close an opening in the vehicle body comprises: a window assembly for vehicles adapted for installation as a unit to close an opening in the vehicle body comprising: a window pane having front, rear and peripheral edge surfaces; a decorative trim frame around the periphery of the window pane, and including a front flange covering an area of the front surface adjacent the peripheral edge of the window pane, securing means for securing the frame to the pane, the securing means including portions of the trim frame which engage the rear surface of the window pane to retain the trim frame on the pane, the trim frame portions extending between the vehicle portion and the rear surface of the pane and being concealed from view when the assembly is viewed from the direction of the front surface, characterised in that the fasteners are bonded to the pane by an adhesive or bonding agent only between the rear surface of the pane and a flat base portion of the fastener, the bonding of any one fastener being independent of the bonding of any other fastener; and the trim frame also including rearwardly extending stop means for engaging a portion of a vehicle against which the assembly is adapted to be fitted and spacing the assembly at a predetermined distance away from the vehicle portion.

The present invention provides a number of advantages over the prior art. In particular, the realisation that the U-shaped fasteners in GB—A—2024297 could be replaced with simple fasteners glued solidly to the rear surface of the window pane means that one has a much greater inherent flexibility in the shape of trim frames which can be used. At the same time, there is a significant saving in weight. In addition, the applicants have realised that in order to position the pane exactly with respect to the vehicle (for example to ensure that the pane is flush with the window opening, to reduce drag), the trim frame can be used as a stop means.

Such a lightweight, economical window assembly is especially adapted for use in vehicles and designed to be assembled as a unit, preferably from the vehicle exterior, readily providing concealed fastening of the assembly which is undetectable from the vehicle exterior, while also providing all necessary decorative trim and sealing functions in a one-step assembly procedure. The assembly cannot easily be removed from the exterior after assembly without disconnecting the fasteners and is, therefore, essentially tamperproof, it is light in weight because of the minimal decorative frame or trim necessary to cover the peripheral edge of the glass, and is economical to manufacture and install.

The securing means preferably include a frame portion engaging the back surface of the window pane such that the frame is clamped over the peripheral edge surface. The frame may be formed from resilient material such that the peripheral edge surface and back surface engaging portions are outwardly bendable but snap back into position around the peripheral edge surfaces; the back surfaces frame engaging portion may include camming means for urging the peripheral edge surface and back surface engaging portions of the frame outwardly around the peripheral edge surface when engaged with the peripheral edge surface. In a preferred embodiment the decorative frame is moulded from a resinous material around the peripheral edge surface of the window pane such that the moulded frame engages at least portions of the front, back and peripheral edge surfaces of the window pane. Preferably a compressible sealant is applied to at least portions of the back surface of the window pane adjacent the peripheral edge surface. The compressible sealant material may suitably be a bead of butyl sealer extending over and engaging portions of the attaching means and decorative frame.

The invention may be carried into practice in various ways but a number of vehicle window assemblies embodying the invention will now be described by way of example with reference to the accompanying drawings, in which:

Figure 1 is a front perspective view of a vehicle window assembly;

Figure 2 is a broken perspective view of the interior of the window assembly shown in Figure 1;

Figure 3 is a perspective view of a typical vehicle body window opening over which the window assembly shown in Figures 1 and 2 is designed to be fitted and illustrating a fragmentary portion of the window assembly fitted therein;

Figure 4 is a sectional, exploded side elevation of an alternative window assembly;

Figure 5 is a sectional side elevation of the window assembly of Figure 4 shown in its assembly condition;

Figure 6 is a sectional side elevation of the window assembly of Figures 4 and 5 secured in a vehicle body and covered by a decorative interior housing;

Figure 7 is a sectional side elevation of an alternative form of window assembly including a snap-on plastic trim assembly;

Figure 8 is a sectional side elevation of a window assembly including a moulded trim member which is injection moulded around the window pane;

Figure 9 is a sectional side elevation of a window assembly like that in Figures 1 to 3 including a moulded plastic trim member having accurately formed retaining tab thereon;

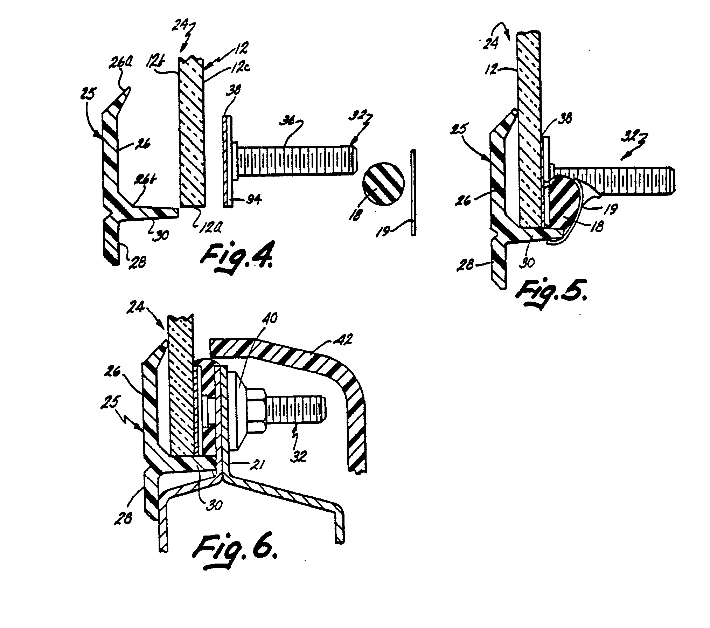

Figures 4, 5 and 6 illustrate arrangements which include some of the features of the invention. However, the shape of the decorative trim frames shown in these three figures does not form part of the invention.

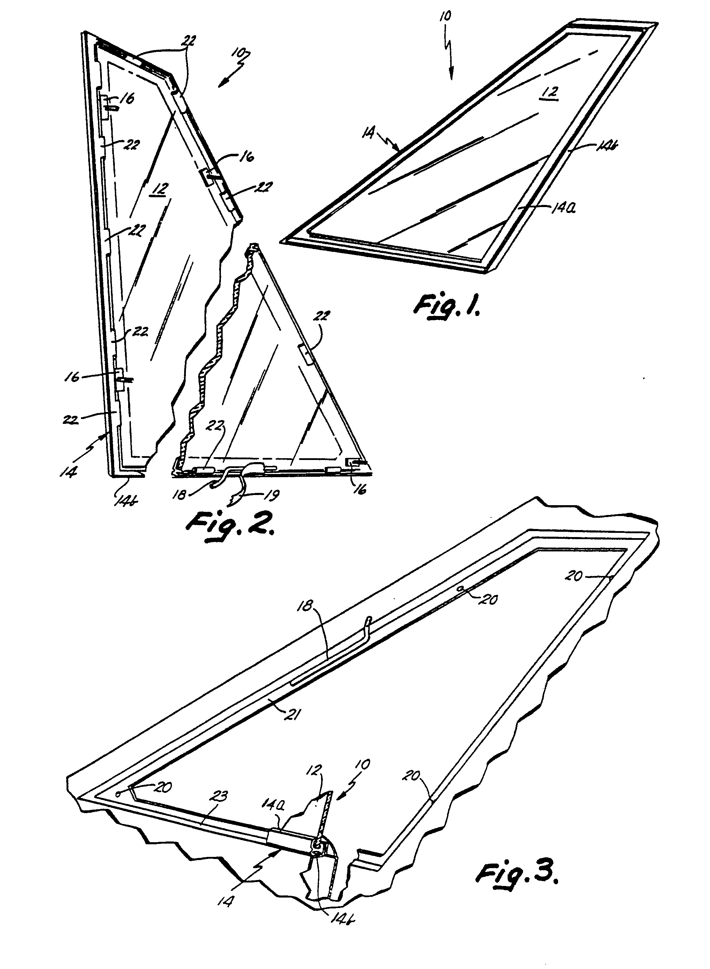

Referring now to the drawings in greater detail, a first embodiment 10 of a window assembly for a vehicle is shown in Figures 1 and 2 and includes three primary components, namely a window pane 12 which is cut to shape, bent or formed to the vehicle body contour as desired, and thereafter tempered, a surrounding or enclosed decorative frame member or bezel 14, and at least one attaching member or fastener 16 secured directly to the window pane 12. As will be more fully explained below, attaching studs 9 or fasteners 16 are mechanically bonded directly to a surface of the glass, such as the rear surface as shown in Figure 2, with an appropriate adhesive bonding composition which rigidly and securely attaches the metallic stud or fastener to the glass surface. As shown in Figures 2 and 3, a bead of butyl sealant 18 may be applied around the edge of the window pane 12 and covered with a wax paper covering strip 19 to protect and prevent the sealant from becoming dirty or contaminated during shipment of the window assembly to a vehicle manufacturing location. Alternatively, the butyl sealant bead 18 may be applied around the pinch flange of the window opening in the vehicle body to which the assembly is adapted to be installed as shown in Figure 3.

Such window assemblies are preferably designed for fixing stationary windows in vehicle body openings directly from the exterior such that only a simple fastening of one or more nuts or fasteners over the attaching studs from the interior is necessary. A typical window opening, over which a correspondingly shaped assembly such as that shown in Figures 1 and 2 is fastened in an automobile or other vehicle, is shown in Figure 3. Spaced apertures 20 are provided at locations along the pinch-weld flange of the sheet metal body work of the vehicle and are aligned with the attaching studs 16 such that the studs will project therethrough when the assembly is fitted over the opening.

As shown in Figure 2, a decorative trim frame 14 is assembled to the window pane 12 by a series of spaced, arcuate or rolled retaining tabs or flanges 22 which engage the rear surface of the window pane and hold the front flange 14a of the frame to the front surface of the window pane. The flanges 22 are heated and roll formed into position with suitable forming apparatus. In addition to front flange 14a retaining the window pane 12, the trim, which in this case is formed from a resinous plastic material, includes an outwardly extending flange 14b which extends under the assembly and presses outwardly against a shoulder 23 of the vehicle body window aperture as is best seen in Figure 3. The flange 14b, together with the butyl sealant 18, effectively seals out dust, water and other foreign matter from the interior of the vehicle body when the assembly 10 is fastened in place.

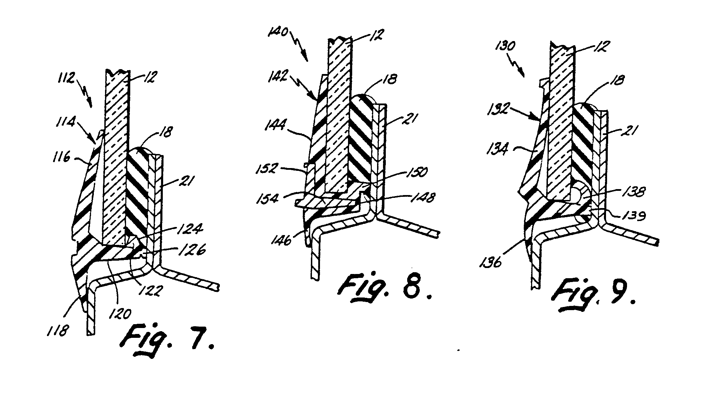

Figures 4, 5 and 6 illustrate a similar but slightly modified form 24 window assembly as compared to that shown in Figures 1, 2 and 3. Because of the shape of the trim frame shown in these figures they do not, as a whole, comprise complete embodiments of the invention. However, they illustrate some features (such as the fastening means) which can be used with other shapes of trim frame (for example, as is shown in Figures 7 to 9) to form embodiments of the invention. In this case, the window pane 12 is fastened to a modified decorative trim or frame 25 which is generally T-shaped and includes a flange 26 directed inwardly toward the assembly, a flange 28 directed outwardly away from the assembly, and a securing flange 30 extending generally at right angles to the flanges 26, 28. The flange 26 is spaced from a front surface 12b of the pane 12 and extends inwardly from the peripheral edge of 12a of the pane 12 at a specified distance ending in a tapered, rearwardly inclined flange 26a designed to engage the front surface 12b of the pane 12 at that specified distance from the peripheral edge 12a. The corner of the pane 12, between the front surface 12b and the peripheral edge surface 12a, engages the junction between a beveled surface 26b and the flange 30 such that the corner of the pane is securely retained against that junction. The flange 28 is designed to extend over and seal against the vehicle body metal work as shown in Figure 6 to help exclude water around the assembly when installed on the vehicle.

The entire decorative trim or frame member 25 is preferably formed, in this instance, from an injection moulded polycarbonate or similar resinous plastic which is sufficiently rigid and durable to retain its shape and integrity in the environmental conditions to which vehicles are subjected. The trim member 25 is bonded to the peripheral edge of surface 12a of the window pane using a suitable adhesive such as an epoxy, polyurethane or silicon adhesive, while the flange extends beyond the rear surface 12c of the window pane and forms a stop or abutment which engages the pinch-weld flange 21 of the vehicle body and limits the insertion of the assembly.

On the opposite or rear surface 12c of the window pane 12 from the flange 26 of the trim member or frame 25 is fastened a metal stud 32 including an integral metal base 34, which may be rectangular as shown, circular, or another shape, secured by welding or the like to a projecting, threaded shaft or fastener 36 best seen in Figures 4, 5 and 6. The studs 32, are preferably formed from ferromagnetic metal and fastened immediately adjacent the peripheral edge surface 12a on the rear surface 12c of the pane 12 by means of a suitable metal-to-glass adhesive or bonding agent of which several are commercially available.

A preferred adhesive system found suitable for attachment of studs 32 directly to glass, and especially tempered glass, is that marketed under the trademark Tenabond by Illinois Tool Works, Inc. of Elgin, Illinois. Such a system is believed to include an epoxy adhesive layer 38, as shown in Figures 4, 5 and 6, typically applied in tape form to a base 34 of the stud 32. The base 34 of the stud 32 and the adhesive layer 38 are pressed against the rear surface 12c of the pane 12 and heated rapidly using an induction heating apparatus of the type shown in any one of United States Patent Nos. 3,816,690, 4,032,740, 4,163,884 or 4,167,259 which activates the adhesive and causes the stud to be rigidly and securely bonded by what is believed to be a mechanical bond directly to the glass surface. Such induction heated adhesives more securely bond metal to glass than do cold, unheated adhesives. Moreover, the induction heating system provides localized heat which is sufficiently intense to properly activate the adhesive without affecting the temper of the glass to which the stud is being applied. Accordingly, the strength and integrity of the glass to which the stud is bonded is not effected by the heating and the resultant metal-glass assembly is stronger and more durable than with other adhesives.

Tests performed on an 8—32 threaded stud having a 322.58 mm² (½ square inch) base area of the type shown herein and bonded directly to a sheet of tempered glass with the Tenabond adhesive system, specifically adhesive product No. TP-8051, have shown that such a bonded stud can remain strongly and securely attached to the glass even after exposure to the environmental conditions to which an automobile or other vehicle is typically exposed. In the above testing, the bonded stud was subjected to 20 cycles of alternating hot and cold temperatures, specifically two hours at −40°C (−40°F) followed by five hours at 87.8°C (190°F). The bonded stud exhibited a shear strength of $3.164 \times 10^5$ kg/m$^2$ (450 p.s.i.) (although it did let loose very slightly) and a tensile strength of $7.814 \times 10^5$ kg/m$^2$ (1120 p.s.i.) after such cycling. When subjected to seven days exposure to 95% relative humidity at 37.8°C (100°F) followed by seven days exposure to 100% relative humidity at −17.8°C (0°F), the bonded stud exhibited a shear strength of $3.937 \times 10^5$ kg/m$^2$ (560 p.s.i.) without loosening and a tensile strength of $8.015 \times 10^5$ kg/m$^2$ (1140 p.s.i.). When exposed to ultraviolet light (simulated sunlight) for seven days, the bonded stud exhibited a shear strength of $5.203 \times 10^5$ kg/m$^2$ (740 p.s.i.) (although it did let loose very slightly). The tensile strength after this exposure could not be accurately measured because the glass shattered when tensile testing was attempted. When soaked in 37.8°C (100°F) water for two hours, the bonded stud exhibited a shear strength of greater than $2.812 \times 10^5$ kg/m$^2$ (400 p.s.i.) and a tensile strength between $8.437 \times 10^5$ kg/m$^2$ (1200 p.s.i.) and $8.999 \times 10^5$ kg/m$^2$ (1280 p.s.i.). Several different bonded studs were tested as described above, and the above values are considered typical of all of the samples tested. Therefore, such environmental testing indicates that the Tenabond bonded studs maintain a bond strength greater than that required for retention in a vehicle and are fully capable of being properly retained in high and low temperatures, high humidity conditions, and after exposure to ultraviolet light (simulated sunlight).

Other suitable adhesives for metal-to-glass bonds useful in the present invention include anerobic polyacrylate cement such as that disclosed in United States Patent 3,885,072, vinyl acetate/phenol formaldehyde containing adhesive such as that disclosed in United States Patent 2,502,970, or epoxy containing cement such as that disclosed in Canadian Patent 702,578.

After assembly of the stud 32 at appropriate locations on the glass using one of the adhesive systems mentioned above, the assembly may be completed by applying a bead or strip 18 of butyl sealant adjacent the peripheral edge surface 12a along the rear surface 12c of the window pane as shown in Figure 5. The sealant 18 may be covered with a wax paper strip 19 to prevent its contamination during shipment of the assembly to a manufacturing location. Thereafter, the strip 19 may be removed from the butyl sealant 18 and the assembly applied by inserting the fasteners or studs 32 through appropriately located apertures 20 in the pinch-weld flange 21 and applying retaining nuts 40 over the studs such that the assembly is drawn tightly against the flange 21 with the end of the decorative trim flange 30 abutting against the exterior of the flange 21. This procedure compresses the butyl sealant 18 between the rear surface of the window pane 12 and around the stud 32 to form an effective seal against the entry of water and other contaminants to the interior of the vehicle as shown in Figure 6.

As will be understood from Figure 6, the fastening area including butyl sealant 18 is concealed when the assembly is viewed from the exterior of the vehicle and the window assembly because the flange 26 of the trim member 25 covers the attachment area of the stud 32 to the window glass 12. If desired, and in most situations, a decorative plastic or other cover 42 may be applied and secured over the fastening area around the interior of the pinch-weld flange to conceal the fastening of the window assembly in place as shown in Figure 6.

Other modified forms of attachment fasteners could be used besides those shown in Figures 1 to 6.

Although the window assembly of the present invention is typically applied directly to a metallic pinch-weld flange of a vehicle body, it may also be secured to an intermediate decorative panel.

As mentioned above, numerous varieties of decorative trim or frame members can be used in the present invention. Several embodiments of those are shown in Figures 7 to 9 wherein like numerals indicate like parts to those described above. Although not shown in Figures 7 to 9, each of the window assembly embodiments shown therein includes attaching studs or fasteners, such as those shown in Figures 4 to 6, which retain the assembly to the pinch-weld flange 21 which is shown in the figures. Such studs may be attached with appropriate adhesive systems or secured around the peripheral edge of the glass as described above.

A premoulded decorative trim frame can be used which may be secured to and around the peripheral edge of the window pane in various ways.

In Figure 7 a moulded trim frame or bezel 114 is shown in a window assembly 112. The trim bezel or frame 114 includes a front flange 116 which contacts the front surface of the window glass 12 only at its free edge, and an outwardly extending flange 118 which engages the vehicle body for sealing purposes. An inwardly extending retaining flange 120 includes spaced ridges 122 which extend substantially parallel to the back surface of the glass 12 and include sloped or bevelled camming surfaces 124 designed to engage the corner between the front surface and peripheral edge surface of the window glass to pivot the resilient flange 120 outwardly when the trim frame or bezel 114 is snapped in place around the window glass. The flange 120 also includes a series of protruding stop members 126 which space the trim frame or bezel 114, and thus the entire assembly 112, at the proper distance from the exterior surface of the pinch-weld flange 21.

In Figure 9, a window assembly embodiment 130 includes a decorative trim frame or bezel 132 having a front flange 134 similar to those shown in embodiments 100 and 112 of an outwardly extending flange 136 which engages the vehicle body for sealing purposes. The frame 132 is retained around the peripheral edge of the window 12 by means of a series of spaced, rolled or arcuately curved retaining tabs 138 similar to the tabs 22 in assembly 10 which are heat formed such that their free end edges contact and are parallel to the rear surface of the glass 12 as shown in Figure 9. Between the rolled or arcuately formed retaining tabs 138, the remainder of the inwardly extending flange of the trim frame 132 forms a series of stop members 139 functioning similarly to the flange 30 in Figures 4 to 6 and projecting members 126 in Figure 12 to space the window assembly properly from the pinch-weld flange 21.

In Figure 8, a window assembly embodiment 140 includes a decorative trim frame or bezel 142 moulded in place around the front, back and peripheral edge surfaces of the window glass 12 from polyvinyl chloride in an injection moulding apparatus. The trim frame includes a front flange 144, an outwardly extending vehicle body engaging flange 146, a rear glass surface engaging a flange 148, and a spacer or stop member 150 for positioning the assembly against the pinch-weld flange 21. Also, an optional, metallic insert 152 may be moulded in place in the trim member 142 for decorative purposes. An insert 152 includes a flange 154 extending generally parallel to the peripheral edge surface for retention of the insert in the moulded trim member.

Accordingly, it will be understood that in each of the vehicle window assembly embodiments described herein, the fasteners are concealed from view from the front or exterior side of the installed window assembly principally because the attachment area of the studs or fasteners to the glass is hidden behind the front flange of the trim or decorative member extending around the peripheral edge of the glass surface. The decorative trim or frame members provide a finished appearance for the assembly without further assembly or finishing procedures being necessary in the manufacturing process of the automobile. Moreover, sealing is accomplished both with flanges on the decorative trim or frame as well as through the use of butyl sealant bead at the rear of the assembly. Finally, integrity and strength for the assembly and its fastening to the vehicle body is obtained through strong, rigid attachment of the securing studs using an appropriate metal-to-glass adhesive or other adhesives depending on the materials used for the fasteners and/or window pane.

## Claims

1. A window assembly (10, 112, 130, 140) for vehicles adapted for installation as a unit to close an opening in the vehicle body comprising: a window pane (12) having front (12b), rear (12c) and peripheral (12a) edge surfaces; a decorative trim frame (14, 114, 132, 142) around the periphery of the window pane, and including a front flange (14a, 116, 134, 144) covering an area of the front surface adjacent the peripheral edge of the window pane, securing means for securing the frame to the pane, the securing means including portions (122, 138, 150) of the trim frame which engage the rear surface (12c) of the window pane (12) to retain the trim frame on the pane, the trim frame portions extending between the vehicle portion and the rear surface of the pane and being concealed from view when the assembly is viewed in the direction of the front surface, a plurality of securing fasteners for fastening the window assembly to an adjacent support, the fasteners having means (36) extending away from the assembly for attaching the assembly to a vehicle body, and the fasteners being concealed from view when the assembly is viewed from the direction of the front surface, characterised in that the fasteners are bonded to the pane by an adhesive or bonding agent (38) only between the rear surface (12c) of the pane and a flat base portion (24) of the fastener, the bonding of any one fastener being independent of the bonding of any other fastener; and the trim frame also including rearwardly extending stop means (30, 126, 139, 150) for engaging a portion of a vehicle against which the assembly is adapted to be fitted and spacing the assembly at a predetermined distance away from the vehicle portion.

2. A window assembly as claimed in Claim 1 in which the fasteners are bonded to the pane (12) behind the frame (14, 114, 132, 142) and within the projection of the covering area adjacent the peripheral edge.

3. A window assembly as claimed in either of the preceding claims in which the said frame portions (122, 138, 150) are such that the frame (14, 114, 132, 142) is clamped over the peripheral edge surface (12a).

4. A window assembly as claimed in any of the preceding claims in which the frame (14, 114, 132, 142) is formed from resilient material and includes a peripheral edge surface engaging portion such that the peripheral edge surface and rear surface engaging portions are outwardly bendable but snap back into position around the peripheral edge surface (12a); the rear surface engaging portions (122, 138, 150) including camming means for urging the peripheral edge surface and rear surface engaging portions of the frame outwardly around the peripheral edge surface (12a) when engaged with the peripheral edge surface.

5. A window assembly as claimed in any one of the preceding claims in which the frame is moulded from a resinous material around the peripheral edge surface (12a) of the window pane (12) such that the moulded frame engages at least portions of the front (12b), rear (12c) and peripheral (12a) edge surfaces of the window pane.

6. A window assembly as claimed in any one of the preceding claims including a compressible sealant material (18) applied to at least portions of the rear surface (12c) of the window pane (12) adjacent the peripheral edge surface (12a).

7. A window assembly as claimed in Claim 6 in which the compressible sealant material is a bead of butyl sealer extending over and engaging portions of the fasteners and frame (14, 114, 132, 142).

8. A window assembly as claimed in any one of the preceding claims in which the fasteners are formed from metal, the window pane (12) is

formed from glass; and the bonding means includes an adhesive which will adhere metal to glass.

9. A window assembly as claimed in Claim 8 in which the adhesive is a heat activatable epoxy cement adapted for activation by induction heating.

10. A window assembly as claimed in Claim 8 in which the adhesive is an anerobic polyacrylate cement, a vinyl acetate/phenol formaldehyde, or an epoxy cement.

11. A vehicle body including means defining a window opening for receiving a window assembly characterised by a window assembly as claimed in any one of the preceding claims.

12. A vehicle body as claimed in Claim 11 including sealing means between the window assembly and the vehicle body for preventing entry of water or contaminants therebetween.

## Patentansprüche

1. Fensteranordnung (10, 112, 130, 140) für Fahrzeuge, die als Einheit einbaubar ist, um eine Öffnung in der Fahrzeugkarosserie zu schließen, mit

einer Fensterscheibe (12), die eine vordere Fläche (12b), eine hintere Fläche (12c) und eine Umfangsrandfläche (12a) aufweist;

einem dekorativen Zierrahmen (14, 114, 132, 142) der den Umfang der Fensterscheibe umgibt und einen Vorderflansch (14a, 116, 134, 144) aufweist, der einen Bereich der vorderen Fläche angrenzend an den Umfangsrand der Fensterscheibe abdeckt,

einer zur Befestigung des Rahmens an der Scheibe dienenden Befestigungsvorrichtung, welche Teile (122, 138, 150) des Abdeckrahmens enthält, die an der hinteren Fläche (17c) der Fensterscheibe (12) angreifen, um den Zierrahmen an der Scheibe zu halten, wobei Teile des Zierrahmens zwischen den Fahrzeugteil und die hintere Fläche der Scheibe reichen und dem Blick verborgen sind, wenn die Anordnung von der vorderen Fläche aus betrachtet wird;

einer Mehrzahl von Sicherungs-Verbindungselementen zum Befestigen der Fensteranordnung an einem benachbarten Support, welche Einrichtungen (36) aufweisen, die sich von der Anordnung weg erstrecken, um die Anordnung an einer Fahrzeugkarosserie anzubringen, und welche dem Blick verborgen sind, wenn die Anordnung von der vorderen Fläche aus betrachtet wird, dadurch gekennzeichnet, daß die Verbindungselemente an der Scheibe durch einen Kleber oder ein Bindemittel (38) nur zwischen der hinteren Fläche (12c) der Scheibe und einem flachen Basisteil (24) der Verbindungselemente verbunden sind, daß die Verbindung jedes Verbindungselementes unabhängig von der der anderen Verbindungselemente ist und daß der Zierrahmen außerdem eine sich nach hinten erstreckende Anschlagsanordnung (30, 126, 139, 150) zur Anlage an einem Teil eines Fahrzeuges, an dem die Anordnung montierbar ist, und zum Haltern der Anordnung in einem vorgegebenen Abstand von diesem Fahrzeugteil enthält.

2. Fensteranordnung nach Anspruch 1, dadurch gekennzeichnet, daß die Verbindungselemente an der Scheibe (12) hinter dem Rahmen (14, 114, 132, 142) und innerhalb des Vorsprunges des Abdeckbereiches neben dem Umfangsrand befestigt sind.

3. Fensteranordnung nach einem der vorhergehenden Ansprüche, dadurch gekennzeichnet, daß die Rahmenteile (122, 138, 150) so ausgebildet sind, daß der Rahmen (14, 114, 132, 142) über die Umfangsrandfläche (12a) geklemmt wird.

4. Fensteranordnung nach einem der vorhergehenden Ansprüche, dadurch gekennzeichnet, daß der Rahmen (14, 114, 132, 142) aus einem elastischen Material gebildet ist und einen an der Umfangsrandfläche angreifenden Teil enthält, so daß der an der Umfangsrandfläche angreifende Teil und Teile, die an der hinteren Fläche angreifen, nach außen gebogen werden können, jedoch in eine Position um die Umfangsrandfläche (12a) zurückschnappen; und daß die an der hinteren Fläche angreifenden Teile (122, 138, 150) Nockeneinrichtungen enthalten, um die Teile des Rahmens, die an der Umfangsrandfläche und der hinteren Fläche angreifen, nach außen um die Umfangsrandfläche (12a) zu drücken, wenn sie an der Umfangsrandfläche angreifen.

5. Fensteranordnung nach einem der vorhergehenden Ansprüche, dadurch gekennzeichnet, daß der Rahmen aus einem Harzmaterial um den Umfangsrand (12a) der Fensterscheibe (12) so gepreßt ist, daß der gepreßte Rahmen zumindest an Teilen der vorderen Fläche (12b), der hinteren Fläche (12c) und der Umfangsrandfläche (12a) der Fensterscheibe angreift.

6. Fensteranordnung nach einem der vorhergehenden Ansprüche, dadurch gekennzeichnet, daß sie ein kompressibles Abdichtmaterial (18) enthält, das zumindest auf Teile der hinteren Fläche (12c) der Fensterscheibe (12) neben der Umfangsrandfläche (12a) aufgebracht ist.

7. Fensteranordnung nach Anspruch 6, dadurch gekennzeichnet, daß das kompressible Abdichtmaterial ein Auftrag aus Butyldichtungsmittel ist, der sich über Teile der Verbindungselemente und des Rahmens (14, 114, 132, 142) erstreckt und an diesen angreift.

8. Fensteranordnung nach einem der vorhergehenden Ansprüche, dadurch gekennzeichnet, daß die Befestigungselemente aus Metall gebildet sind, daß die Fensterscheibe (12) aus Glas gebildet ist; und daß das Bindemittel einen Kleber zur Verbindung von Metall und Glas enthält.

9. Fensteranordnung nach Anspruch 8, dadurch gekennzeichnet, daß der Kleber ein wärmeaktivierbarer Epoxykleber ist, der durch Induktionsheizung aktivierbar ist.

10. Fensteranordnung nach Anspruch 8, dadurch gekennzeichnet, daß der Kleber ein anärober Polyacrylatkleber, ein Vinylacetat/Phenolformaldehyd oder ein Epoxykleber ist.

11. Fahrzeugkarosserie mit einer Einrichtung, die eine Fensteröffnung zur Aufnahme einer Fensteranordnung bildet, gekennzeichnet durch eine Fensteranordnung nach einem der vorhergehenden Ansprüche.

12. Fahrzeugkarosserie nach Anspruch 11, gekennzeichnet durch Abdichtmittel zwischen der Fensteranordnung und der Fahrzeugkarosserie, um ein Eindringen von Wasser oder Verunreinigungen zwischen die Fensteranordnung und die Fahrzeugkarosserie zu verhindern.

**Revendications**

1. Montage de fenêtre (10, 112, 130, 140) pour des véhicules, conçu pour être installé sous forme unitaire pour fermer une ouverture prévue dans la carrosserie du véhicule comprenant: une vitre de fenêtre (12) ayant des surfaces avant (12b), arrière (12c) et des bords périphériques (12a); un cadre décoratif de garniture (14, 114, 132, 142) sur le pourtour de la vitre de fenêtre et comprenant un bord avant (14a, 116, 134, 144) recouvrant une portion de la surface avant adjacente au bord périphérique de la vitre de fenêtre, des moyens de fixation pour fixer le cadre à la vitre, les moyens de fixation comprenant des portions (122, 138, 150) du cadre de garniture qui viennent en prise avec la surface arrière (12c) de la vitre de fenêtre (12) afin de maintenir le cadre de garniture sur la vitre, les portions du cadre de garniture s'étendant entre la portion du véhicule et la surface arrière de la vitre et étant cachées de la vue lorsque l'on regarde le montage dans la direction de la surface avant, une pluralité d'attaches de fixation pour fixer le montage de fenêtre à un support adjacent, les attaches comprenant des moyens (36) s'écartant du montage pour fixer le montage à une carrosserie de véhicule, et les attaches étant cachées de la vue lorsque l'on regarde le montage à partir de la direction de la surface avant, caractérisé en ce que les attaches sont fixées à la vitre par un agent adhésif ou de liaison (38) uniquement entre la surface arrière (12c) de la vitre et une portion de socle plat (24) de l'attache, la liaison d'une attache quelconque étant indépendante de la liaison d'une autre attache quelconque; et le cadre de garniture comprenant également, orientés vers l'arrière, des moyens de butée (30, 126, 139, 150) pour venir en prise avec une portion d'un véhicule contre lequel le montage est prévu pour être installé et écartant le montage d'une distance prédéterminée par rapport à la portion du véhicule.

2. Montage de fenêtre selon la revendication 1, caractérisé par le fait que les attaches sont fixées à la vitre (12) derrière le cadre (14, 114, 132, 142) et dans la saillie de la surface de recouvrement adjacente au bord périphérique.

3. Montage de fenêtre selon l'une quelconque des revendications précédentes caractérisé par le fait que lesdites portions de cadre (122, 138, 150) sont telles que le cadre (14, 114, 132, 142) soit maintenu sur la surface du bord périphérique (12a).

4. Montage de fenêtre selon l'une quelconque des revendications précédentes, caractérisé par le fait que le cadre (14, 114, 132, 142) est constitué d'un matériau élastique et comprend une portion s'engageant avec la surface du bord périphérique de telle façon que les portions s'engageant avec la surface du bord périphérique et avec la surface arrière puissent être cintrées vers l'extérieur mais se réenclenchent en place autour de la surface du bord périphérique (12a); les portions s'engageant avec la surface arrière (122, 138, 150) comprenant des moyens formant cadre pour pousser les portions du cadre qui viennent en prise avec la surface du bord périphérique et avec la surface arrière vers l'extérieur autour de la surface du bord périphérique (12a) lorsqu'elles sont en prise avec la surface du bord périphérique.

5. Montage de fenêtre selon l'une quelconque des revendications précédentes, caractérisé par le fait que le cadre est moulé à partir d'un matériau résineux autour de la surface du bord périphérique (12a) de la vitre de fenêtre (12) de telle façon que le cadre moulé vienne en prise au moins avec des portions des surfaces avant (12b), arrière (12c) et du bord périphérique (12a) de la vitre de fenêtre.

6. Montage de fenêtre selon l'une quelconque des revendications précédentes, comprenant un matériau d'étanchéité compressible (18) appliqué au moins sur les portions de la surface arrière (12c) de la vitre de fenêtre (12) adjacente à la surface du bord périphérique (12a).

7. Montage de fenêtre selon la revendication 6, caractérisé par le fait que le matériau d'étanchéité compressible est un bourrelet de matériau d'étanchéité au butyle s'étendant sur des portions des attaches et du cadre (14, 114, 132, 142) et s'engageant avec elles.

8. Montage de fenêtre selon l'une quelconque des revendications précédentes, caractérisé par le fait que les attaches sont formées en métal, la vitre de fenêtre (12) est constituée en verre; et les moyens de fixation comprennent un adhésif qui colle le métal au verre.

9. Montage de fenêtre selon la revendication 8, caractérisé par le fait que l'adhésif est un ciment époxy activable à la chaleur apte à être activé par un chauffage à induction.

10. Montage de fenêtre selon la revendication 8, caractérisé par le fait que l'adhésif est un ciment de polyacrylate anérobique, un acétate de vinyle/phénol formaldéhyde, ou un ciment époxy.

11. Carrosserie de véhicule comprenant des moyens délimitant une ouverture de fenêtre pour recevoir un montage de fenêtre, caractérisé par un montage de fenêtre selon l'une quelconque des revendications précédentes.

12. Carrosserie de véhicule selon la revendication 11, comprenant des moyens d'étanchéité entre le montage de fenêtre et la carrosserie du véhicule pour empêcher la pénétration d'eau ou d'autres contaminants entre eux.

Fig. 1.

Fig. 2.

Fig. 3.

Fig.4.

Fig.5.

Fig.6.

Fig. 7.

Fig. 8.

Fig. 9.